# EUROPÄISCHE PATENTSCHRIFT

(11) **EP 0 920 799 B1**
(45) Veröffentlichungstag und Bekanntmachung des Hinweises auf die Patenterteilung: **23.05.2001**
(21) Anmeldenummer: 98121817.5
(22) Anmeldetag: 17.11.1998
(51) Int. Cl.: A01F 15/07, F16C 33/72

(54) **Vorrichtung zum Verschliessen eines Durchtritts zwischen zwei relativ zueinander beweglichen Teilen und Rolle einer Erntemaschine**
Device for sealing a passage between two relatively to one another movable parts and roll for a harvesting machine
Dispositif pour fermer un passage entre deux parties mobiles l'un par rapport à l'autre ainsi que rouleau pour machine de récolte

(30) Priorität: 06.12.1997 DE 19754234
(43) Veröffentlichungstag der Anmeldung: 09.06.1999
(73) Patentinhaber: DEERE & COMPANY, Moline, Illinois 61265-8098 (US)
(72) Erfinder: Viaud, Jean, 70100 Gray (FR); Clauss, Steffen, 66503 Dellfeld (DE)
(74) Vertreter: Magin, Ludwig Bernhard

(56) Entgegenhaltungen:
- EP-A- 0 330 975
- DE-A- 3 320 715
- DE-A- 3 516 131
- DE-A- 4 231 863
- GB-A- 792 327
- US-A- 5 193 450
- US-A- 5 347 801
- US-A- 5 603 206

## Beschreibung

Die Erfindung betrifft eine Vorrichtung zum Verschließen eines Durchtritts zwischen zwei relativ zueinander beweglichen Teilen, insbesondere zwischen einem Rotationskörper und einer ortsfesten Wandung, mit einem Kragen, der an dem zweiten Teil angebracht ist, konzentrisch zu dem ersten Teil verläuft und sich mit diesem teilweise deckt und eine Rolle einer Erntemaschine, insbesondere einer Rundballenpresse, die über eine Welle in einem Lager drehbar aufgenommen ist, wobei das Lager in einer Wandung gehalten wird.

Die EP-A1-0 330 975 offenbart eine Rundballenpresse mit einer Vielzahl von Rollen, die sich zwischen zwei Seitenwänden erstrecken und Riemen aufnehmen, die einen Ballenpreßraum umgeben. Jede Rolle ist auf einer Achse mittels eines Rollenlagers drehbar aufgenommen, das in dem Innenraum der hohlen Rolle mit einem Abstand zu deren Stirnfläche aufgenommen wird. Zwischen der Stirnfläche der Rolle und dem Lager ist eine Dichtung eingefügt, die radial innen drehfest und dicht mit der Achse verbunden ist und radial außen mit einem geringfügigen Abstand vor der Innenumfangsfläche der Rolle endet. Die radial außen liegende Fläche der Dichtung weist mehrere Ringnuten auf, die dazu bestimmt sind, kurzes Gut, das dem Ballenpreßraum entfällt, aufzunehmen, so daß sich eine Art Faserdichtung ergibt, die verhindert, daß Schmutz zu dem Lager gelangt.

Aus der DE-A-3 320 715 ist ebenfalls eine Rundballenpresse mit einer Vielzahl von Rollen bekannt, die einen Ballenpreßraum umgeben und mit einem Wellenstummel in Lagern drehbar aufgenommen werden, die sich in den Seitenwänden der Rundballenpresse befinden. Die Wellenstummel sind in zwei Flanschen in der Rolle gehalten, die einen Abstand zu der Stirnseite der Rolle wahren, so daß die Rolle in einem bestimmten Bereich nach außen offen ist. Konzentrisch zu dem Lager wie auch dem Rollenkörper und radial zwischen diesen ist ein Kragen an einer Wand des Ballenpreßraums angebracht. Dieser Kragen erstreckt sich axial und sich mit dem offenen Endabschnitt der Rolle deckend und mit einem geringen radialen Abstand zu diesem, so daß sich ein relativ geringer Radialspalt bildet, der Schmutz von dem Lager abhalten soll.

Aus der GB-A-792,327 geht eine Lageranordnung für die Räder eines Eisenbahnwagens hervor. Danach werden zwei in O-Art auf eine Welle aufgesetzte Kegellager mittels einer Ringscheibe auf einer Achse gehalten, wobei zwischen gegenüberliegenden Stirnseiten der Achse und der Ringscheibe ein Blechring mit einer axial verlaufenden Wand vorgesehen ist, die einen Teil der Ringscheibe axial überdeckt. Ein Lippendichtring ist in ein Radgehäuse eingepreßt, und der Lippenbereich dichtet einerseits an der Ringscheibe ab und wahrt andererseits einen Abstand zu der Wand. Der Zusammenbau wird während des Betriebs mittels eines Deckels, der an dem Lippendichtring befestigt ist, gegen das Eindringen von Schmutz, etc. geschützt. Lediglich dann, wenn der Deckel zum Ausbau und der Wartung des Radsatzes demontiert ist, soll der Lippendichtring Schmutz vom Eintritt in den Lagerbereich abhalten. Die Verwendung eines Deckels ist aufwendig und nicht immer möglich. Wenn man jedoch den Deckel wegläßt wird grober Schmutz die Lippen schnell verstopfen und für hohe Reibung sorgen, wie dies bereits im Stand der Technik bekannt ist.

Das der Erfindung zugrunde liegende Problem wird darin gesehen, daß diese Arten, das Lager abzudichten, nicht geeignet sind, Feuchtigkeit von dem Lager fernzuhalten, d. h. der Durchtritt zwischen zwei relativ zueinander beweglichen Teilen wird nicht ausreichend verschlossen.

Dieses Problem wird erfindungsgemäß durch die Lehre des Patentanspruchs 1 bzw. 8 gelöst, wobei in den weiteren Patentansprüchen Merkmale aufgeführt sind, die die Lösung in vorteilhafter Weise weiterentwickeln.

Auf diese Weise wird der Eintritt von Schmutz durch den Spalt zwischen dem Kragen und dem als Rotationskörper ausgebildeten ersten Teil weitgehendst verhindert und dennoch eintretende Feuchtigkeit oder Flüssigkeit wird durch den Dichtkörper z. B. von dem Lager fern gehalten. Dadurch, daß bereits grobes Gut von dem Eintritt abgehalten wird, gelangt auch kaum ein Träger von Feuchtigkeit bis zu dem Dichtkörper. Der Begriff Rotationskörper, umfaßt sowohl im Querschnitt runde oder kantige Rollen einer Rundballenpresse, als auch Vorpreßwalzen oder sonstige Förderwalzen in einem Feldhäcksler, Rotationsförderer in einem Mähdrescher, einem Mäher, oder dergl. und viele andere Verwendungen.

Während technisch problemlos ein Dichtkörper verwendet werden kann, der vollflächig anliegt, ist es aus Kostengründen vorteilhaft, wenn Dichtlippen verwendet werden, die ein Anschmiegen an die Dichtfläche bei geringem Reibungswiderstand erlauben.

Nach einer Alternative reichen nicht die Dichtlippen selbst bis an die Dichtfläche heran, sondern zwischen Dichtlippen aufgenommenes Dichtmaterial. Dieses Dichtmaterial kann aus einem Dichtring bestehen, der zwischen die Dichtlippen eingefügt wird; es kann aber auch der Aufbau von eingetretenem, kurzen Bröckelgut aus der Erntemaschine dazu benutzt werden, den geringfügigen Spalt zwischen den Dichtlippen und der Dichtfläche zu verschließen. Hierdurch erfolgt eine automatische Anpassung an die Spaltweite, ohne daß es der kostenintensiven Einhaltung enger Fertigungstoleranzen bedarf.

Nach der bisher beschriebenen Lehre wird die Durchtrittsstrecke, z. B. der Weg zu dem Lager, wenigstens in einen äußeren und einen inneren Bereich gespalten. wenn eine hohe Beanspruchung zu erwarten ist, kann ein dritter Bereich, bzw. eine dritte Kammer dadurch geschaffen werden, daß ein mit dem Kragen drehfest verbundener Ring vorgesehen ist, an dem der Dichtkörper dichtend zur Anlage bringbar ist. Ein solcher Ring kann fertigungstechnisch genau hergestellt werden und stets eine dichtende Anlage an dem Dichtkörper eingehen, so daß sich drei Abschnitt oder Kammern ergeben, in denen die Feuchtigkeit aufgefangen wird.

Der Kragen kann an einem in der Art eines Blechtopfes gebildeten Teil angeformt sein, und weist eine axial verlaufende Dichtfläche und eine radial verlaufende Befestigungsfläche auf, wobei unter Fläche nicht eine Oberfläche, sondern eine dünner mehr oder weniger ebener Körper zu verstehen ist. Der Kragen kann biegetechnisch hergestellt werden oder auch gegossen oder sonstwie gegossen, geblasen oder dergl. hergestellt werden.

Eine einwandfreie, nämlich insbesondere konzentrische, Ausrichtung des Lagers, des Kragens, des Dichtkörpers und gegebenenfalls des Rings wird erreicht, wenn der Kragen so ausgebildet ist, daß er mittig das Lager aufnimmt, was z. B. mittels einer Bördelung erfolgen kann.

Eine besonders wertvolle Verwendung einer solchen Vorrichtung ist in einer Rolle einer Erntemaschine zu sehen, und zwar insbesondere dann, wenn es sich um eine Rundballenpresse handelt. Rundballenpressen werden vielfach zum Pressen von feuchtem und bröckelndem Erntegut benutzt, was bewirkt, daß in dem Gut enthaltene zumeist aggressive Pflanzensäfte austreten und vorhandene Lager angreifen können. Diese Gefahr wird wenigstens verringert, wenn die Rolle über eine Welle in einem Lager drehbar aufgenommen ist, wobei das Lager in einer Wandung gehalten wird und eine Vorrichtung nach einem oder mehreren der vorherigen Ansprüche vorgesehen ist.

Diese Vorrichtung läßt sich geschützt und raumsparend unterbringen, wenn die Rolle eine hohle Trommel aufweist, die auf einem Flansch drehfest aufgenommen ist, wobei der Flansch einen Abstand zu der Endkante der Trommel aufweist und zentrisch eine Stummelwelle aufnimmt, die in dem Lager aufgenommen wird. Der Dichtkörper und der Kragen befinden sich als in einem abgeschotteten Bereich und sind somit geschützt.

In der Zeichnung ist ein nachfolgend näher beschriebenes Ausführungsbeispiel der Erfindung dargestellt. Es zeigt:
- Fig. 1: eine Erntemaschine mit mehreren Rotationskörpern in Seitenansicht und schematischer Darstellung und
- Fig. 2: einen Endabschnitt einer Rolle mit einer Vorrichtung zu Abdichten eines Lagers im Schnitt und in vergrößerter Darstellung.

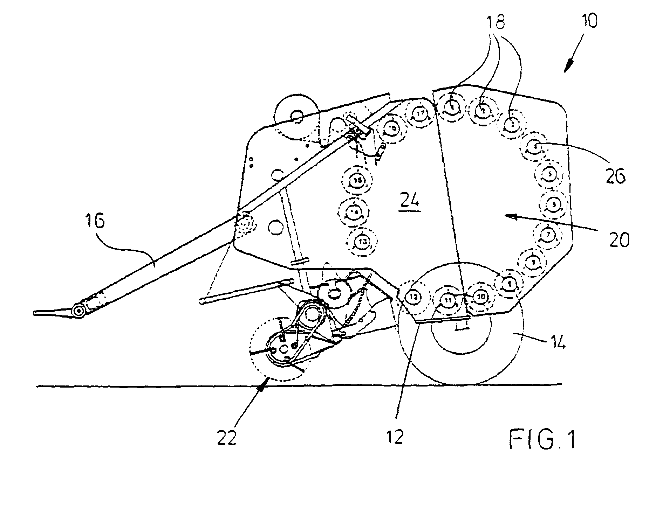

Eine in Figur 1 gezeigte Erntemaschine 10 besitzt einen Rahmen 12, der sich über Räder 14 auf dem Boden abstützt, mittels einer Deichsel 16 an ein nicht gezeigtes Zugfahrzeug angehängt werden kann und erste rotierende Teile 18, die einen Ballenpreßraum 20 umgeben.

Bei der dargestellten Erntemaschine 10 handelt es sich um eine Rundballenpresse mit einem Ballenpreßraum 20 unveränderlicher Größe, dem über eine Aufnahmevorrichtung 22 auf dem Boden liegendes Erntegut für einen Preßvorgang zugeführt wird. Bei dem Gut kann es sich unter anderem um Gras oder Heu handeln, das einen mehr oder weniger großen Feuchtigkeitsgehalt aufweist. Insbesondere bei sogenannter Silageherstellung wird Gras oder anderes Futter im nahezu nassen Zustand aufgenommen. Infolge der Verdichtung während des Preßvorgangs tritt die Feuchtigkeit aus dem Gut aus und gelangt in alle dem Ballenpreßraum 20 nahegelegenen Bereiche.

Allerdings kann es sich bei der Erntemaschine 10 auch um eine anderer Bauart handeln, z. B. einen Mähdrescher, einen Feldhäcksler, einen Mähaufbereiter und dergleichen. Bei all diesen Erntemaschinen 10 kann Gut verarbeitet werden, aus dem Säfte austreten, die Lager oder andere Teile angreifen können.

Der Rahmen 12 enthält zwei als Seitenwände dienende Wandungen aus Blech, die des weiteren als zweite Teile 24 bezeichnet werden und in denen sich eine Vielzahl nahezu auf einem Kreis gelegener Öffnungen 26 befindet. Diese zweiten Teile 24 bilden die seitliche Begrenzung des Ballenpreßraums 20.

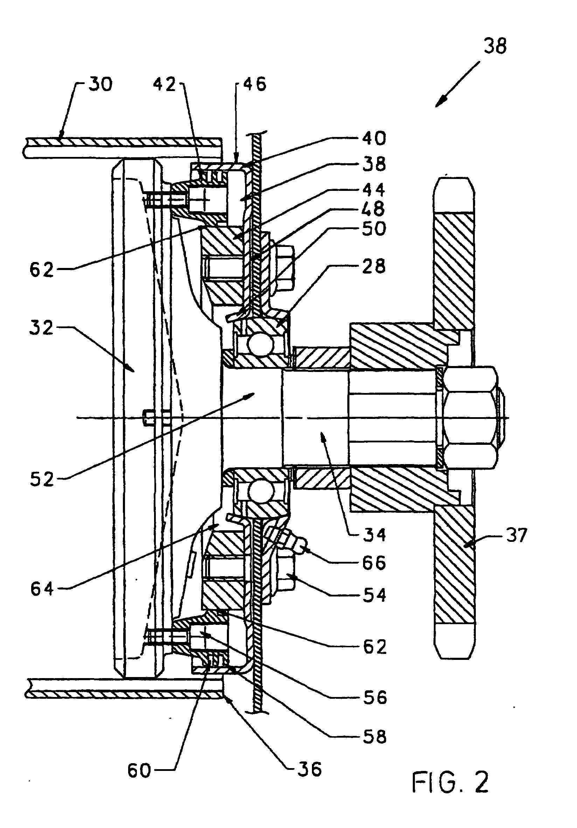

Die ersten Teile 18, die in vergrößerter Darstellung in Figur 2 gezeigt sind, sind in diesem Ausführungsbeispiel als runde Rotationszylinder ausgebildet und mittels Lagern 28 in den zweiten Teilen 24 drehbar gelagert. Je nach der gewählten Bauart sind die ersten Teile 18 frei drehbar oder angetrieben. Die ersten Teile 18 umgeben den Ballenpreßraum 20 umfangsseitig und werden somit ständig von dem feuchten zu pressenden Gut beaufschlagt.

Die weitere Beschreibung der ersten Teile 18 erfolgt mit Bezug auf Figur 2.

Jeder erste Teil 18 enthält eine hohl ausgebildete Trommel 30, an wenigstens einem Endbereich einen Flansch 32 und mit diesem verbunden eine Welle 34.

Der Außendurchmesser des Flansches 32 entspricht im wesentlichen dem Innendurchmesser der Trommel 30, so daß beide z. B. miteinander verschweißt oder verschraubt werden und eine drehfeste Verbindung eingehen können. Der Flansch 32 ist so in Bezug auf eine Stirnfläche 36 der Trommel 30 in dieser angebracht, daß sich eine kurze nach außen offene Hülse ergibt. Von dem Flansch 32 erstreckt sich nach außen, d. h. in Richtung der Stirnfläche 36 die Welle 34, die in dem Lager 28 drehbar aufgenommen ist. Das Lager 28 selbst erstreckt sich durch eine der Öffnungen 26. Bei dem dargestellten Ausführungsbeispiel ist auf nicht näher beschriebene Weise auf die Welle 34 ein Zahnrad 38 drehfest aufgesetzt, mit dessen Hilfe der erste Teil 18 angetrieben werden kann. Genausogut könnte die Welle 34 unmittelbar hinter dem Lager 28 enden, wenn der erste Teil 18 nicht angetrieben wird.

Der in Figur 2 dargestellt Aufbau wiederholt sich bei ersten Teilen 18 großer Länge wenigstens ähnlich an deren gegenüberliegenden Endbereich.

Es wird darauf hingewiesen, daß die Welle 34 auch starr in dem zweiten Teil 24 gehalten und sich das Lager 28 zwischen der Welle 34 und dem Flansch 32 befinden könnte, was allerdings voraussetzt, daß der erste Teil 18 dort nicht angetrieben werden muß. Weiterhin kommt es nicht auf die Ausbildung oder das Vorhandensein des Flansches 32 und die Befestigung des Lagers 28 in einer Wandung an; es ist lediglich ein abzuschirmender Bereich, z. B. eine drehbare Lagerung eines dreh- oder schwenkbaren Teils erforderlich.

Zur Abdichtung des Lagers 28 gegenüber dem einen Teil 18, der Rolle, ist eine Vorrichtung 38 vorgesehen, die einen Kragen 40, einen Dichtkörper 42 und in dem bevorzugten Ausführungsbeispiel auch einen Ring 44 enthält, wobei letzterer nicht zwingend ist.

Der Kragen 40 weist in dem bevorzugten Ausführungsbeispiel eine axial verlaufende Dichtfläche 46 und eine radial verlaufende Befestigungsfläche 48 auf, die unter einem rechten Winkel zueinander verlaufen und in der Art eines Tellers oder Topfes miteinander verbunden sind. Vorzugsweise wird dieser Kragen 40 als Tiefziehteil aus Blech hergestellt. Selbstverständlich kann es sich auch um einen Kunststoffteil handeln. In jedem Fall kann er unter Wahrung enger Fertigungstoleranzen hergestellt werden. Der Kragen 40 weist in seiner Befestigungsfläche 48 eine in einer Bördelung 50 auslaufende Öffnung 52 auf, die der Aufnahme des Lagers 28 wie dem Durchtritt der Welle 34 dient. Die Befestigung an dem zweiten Teil 24 erfolgt mittels mehrerer Schrauben 54. Die Dichtfläche 46 erstreckt sich senkrecht von der Innenseite des zweiten Teils 24 ausgehend zu dem Innenraum des ersten Teils 18 hin und überlappt den Endbereich der Trommel 30. Dabei hält die Dichtfläche 46 einen Abstand zu der Innenfläche der Trommel 30 ein, der so gering wie möglich ist, wobei Fertigungstoleranzen und Verformungen aufgrund der angreifenden Kräfte zu berücksichtigen sind. Auf diese Weise wird ein Spalt gebildet, der dem Eintritt von Schmutz entgegen steht.

Der Dichtkörper 42 ist aus einem verschleißfesten und säurebeständigen Kunststoff gebildet und in diesem Ausführungsbeispiel mittels Schrauben 56 an dem Flansch 32 drehfest gehalten. Andererseits könnte die Befestigung an dem Flansch 32 auch stoff-, form- oder reibschlüssig erfolgen. Der Dichtkörper 42 ist in der Form eines Dichtringes gehalten, der auf seiner radial außenliegenden Seite mehrere - in diesem Fall drei - Dichtlippen 58 aufweist, die zwischen sich Ausnehmungen 60 belassen. Auf der diesen Dichtlippen 58 und Ausnehmungen 60 gegenüberliegenden radial innen gelegenen und sich axial erstreckenden Fläche ist eine Dichtlippe 62 vorgesehen. Diese Dichtlippen 58 und 62 sind von einer gewissen Flexibilität und können bei Deformationen entsprechend ausweichen. In axialer Richtung endet der Dichtkörper 42 wesentlich vor der Befestigungsfläche 48 des Kragens 40 und bildet somit eine (zweite) Kammer.

In dem bevorzugten Ausführungsbeispiel liegen die Dichtlippen 62 nicht an der Innenseite der Dichtfläche 46 an, sondern enden kurz vor dieser, wobei ein Abstand von weniger als einem Millimeter eingehalten werden kann. Auf diese Weise wird ein übermäßiger Reibkontakt mit entsprechender Hitzeentwicklung vermieden. Außerdem kann mit größeren Toleranzen gefertigt werden, was die Fertigungskosten reduziert. Die Dichtwirkung wird in diesem Fall dadurch erzielt, daß sich in den Ausnehmungen 60 ansammelnder faseriger Schmutz in der Form von Halmen, Blättern und Spreu zu einem kompakten Dichtring formt, der den verbleibenden Spalt, d. h. den Durchtritt, verschließt.

Alternativ könnten die Dichtlippen 58 auch bis an die Dichtfläche 46 heranreichen oder eine separate Dichtung in den Ausnehmungen 60 vorgesehen werden. Es wäre auch möglich, die Dichtlippen 58 und die Ausnehmungen 60 zu einem Labyrinth zu ergänzen.

Jedenfalls bilden die Dichtlippen 58 ein Hindernis, das eine erste Kammer außerhalb des Dichtkörpers 42 von einer zweiten Kammer hinter dem Dichtkörper 42 trennt und somit jede Stelle dahinter - im speziellen Ausführungsbeispiel das Lager 28 - gegen Feuchtigkeit schützt.

Der Ring 44 ist als Stahl- oder Kunststoffring ausgebildet und mit den Schrauben 54 gemeinsam mit dem Kragen 40 an den zweiten Teil 24 angeschraubt. Ein von dem Ring 44 umschlossener Innenraum 64 ist ausreichend groß, die Bördelung 52 und mit ihr das Lager 28 aufzunehmen. Der Außendurchmesser des Rings 44 entspricht im wesentlichen dem Innendurchmesser der Dichtlippe 62, die sich auf den Ring 44 dichtend aufsetzt. Hierzu erstreckt sich der Ring 44 ausreichend axial von dem zweiten Teil 24 bzw. der Befestigungsfläche 48 des Kragens 40 nach innen.

Es ist somit zu erkennen, daß zwischen der axial außenliegenden Stirnseite des Dichtkörpers 42, der Innenseite der Dichtfläche 46, der ebenfalls innenliegenden Seite der Befestigungsfläche 48 und der radial nach außen weisenden Umfangsfläche des Rings 44 eine in sich geschlossene Kammer entsteht, die evtl. soweit vorgedrungene Feuchtigkeit oder Schmutz zurückhält.

Daraus folgt ferner, daß zwischen dem Ring 44, der Dichtlippe 62, der axial nach außen weisenden Seite des Flansches 32 und der nach innen weisenden Seite des Lagers 28 eine dritte Kammer entsteht, die das Lager 28 abschirmt.

Je nach den anzutreffenden Verhältnissen kann das Lager 28 mit Fett gefüllt werden, um zum einen die Lagerreibung zu verringern und zum andern den Angriff von aggressiver Feuchtigkeit abzuwehren. Von außen durch einen Schmiernippel 66 eingepreßtes Fett sammelt sich in der dritten Kammer an und hält dadurch Feuchtigkeit und Schmutz von dem Lager 28 ab. Allerdings ist es nicht zwingend, diese dritte Kammer mit Fett zu füllen.

## Patentansprüche

1. Vorrichtung (38) zum Verschließen eines Durchtritts zwischen zwei relativ zueinander beweglichen Teilen (18, 24), insbesondere zwischen einem Rotationskörper und einer ortsfesten Wandung, mit einem Kragen (40), der an dem zweiten Teil (24) angebracht ist, konzentrisch zu dem ersten Teil (18) verläuft und sich mit diesem teilweise deckt, gekennzeichnet durch einen Dichtkörper (42), der einerseits mit dem ersten Teil (18) oder dem Kragen (40) verbunden ist und andererseits an dem Kragen (40) oder dem ersten Teil (18) dichtend zur Anlage bringbar ist.

2. Vorrichtung nach Anspruch 1, dadurch gekennzeichnet, daß der Dichtkörper (42) Dichtlippen (58, 62) aufweist.

3. Vorrichtung nach Anspruch 1 oder 2, dadurch gekennzeichnet, daß der Dichtkörper (42) Ausnehmungen (60) zur Aufnahme von Dichtmaterial aufweist.

4. Vorrichtung nach einem oder mehreren der vorherigen Ansprüche, dadurch gekennzeichnet, daß ein mit dem Kragen (40) drehfest verbundener Ring (44) vorgesehen ist, an dem der Dichtkörper (42) dichtend zur Anlage bringbar ist.

5. Vorrichtung nach einem oder mehreren der vorherigen Ansprüche, dadurch gekennzeichnet, daß der Dichtkörper (42) als ein Dichtring aus einem verschleißfesten Kunststoff ausgebildet ist, der insbesondere mit Schrauben (56) an dem ersten Teil (18) oder dem Kragen (40) festlegbar ist.

6. Vorrichtung nach einem oder mehreren der vorherigen Ansprüche, dadurch gekennzeichnet, daß der Kragen (40) eine axial verlaufende Dichtfläche (46) und eine radial verlaufende Befestigungsfläche (48) aufweist.

7. Vorrichtung nach Anspruch 6, dadurch gekennzeichnet, daß die Befestigungsfläche (48) zur Aufnahme eines Lagers (28) ausgebildet ist.

8. Rolle einer Erntemaschine, insbesondere einer Rundballenpresse, die über eine Welle (34) in einem Lager (28) drehbar aufgenommen ist, wobei das Lager (28) in einer Wandung gehalten wird, gekennzeichnet durch eine Vorrichtung (38) nach einem oder mehreren der vorherigen Ansprüche, wobei die Rolle den ersten und die Wandung den zweiten Teil (18, 24) darstellt.

9. Rolle nach Anspruch 8, gekennzeichnet durch einen hohle Trommel (30), die auf einem Flansch (32) drehfest aufgenommen ist, wobei der Flansch (32) einen Abstand zu einer Stirnfläche (36) der Trommel (18) aufweist und zentrisch eine als Stummelwelle ausgebildete Welle (34) aufnimmt, die in dem Lager (28) aufgenommen wird.

## Claims

1. Device (38) for sealing a gap between two parts (18, 24), which are movable relative to each other, in particular between a rotating body and a stationary wall, which device has a collar (40) which is fixed to the second part (24), extends concentrically to the first part (18) and is covered partially by the latter, characterised by a sealing body (42) which is connected, on the one hand, with the first part (18) or the collar (40) and, on the other hand, can be made to abut against the collar (40) or the first part (18) so as to form a seal.

2. Device according to claim 1, characterised in that the sealing body (42) has sealing lips (58, 62).

3. Device according to claim 1 or 2, characterised in that the sealing body (42) has recesses (60) for receiving sealing material.

4. Device according to one or more of the preceding claims, characterised in that a ring (44), which is connected non-rotatably to the collar (40), is provided, against which ring the sealing body (42) can be made to abut so as to form a seal.

5. Device according to one or more of the preceding claims, characterised in that the sealing body (42) is configured as a sealing ring made of wear-resistant plastic material and can be secured to the first part (18) or to the collar (40) in particular by means of screws (56).

6. Device according to one or more of the preceding claims, characterised in that the collar (40) has an axially extending sealing face (46) and a radially extending attachment face (48).

7. Device according to claim 6, characterised in that the attachment face (48) is configured to receive a bearing (28).

8. Roller of a harvesting machine, in particular of a round baler, which is received rotatably in a bearing (28) via a shaft (34), the bearing (28) being retained in a wall, characterised by a device (38) according to one or more of the preceding claims, the roller representing the first and the wall the second part (18, 24).

9. Roller according to claim 8, characterised by a hollow drum (30) which is received non-rotatably on a flange (32), the flange (32) having a spacing from an end-face (36) of the drum (18) and receiving centrally a shaft (34) configured as a stub shaft, which shaft is received in the bearing (28).

## Revendications

1. Dispositif (38) pour fermer un passage entre deux parties (18,24) mobiles l'une par rapport à l'autre, notamment entre un corps rotatif et une paroi fixe, comportant un collet (40) qui est monté sur la seconde partie (24), s'étend concentriquement par rapport à la première partie (18) et recouvre partiellement cette dernière, caractérisé par un corps d'étanchéité (42), qui est relié d'une part à la première partie (18) ou au collet (40) et peut d'autre part être amené à s'appliquer de façon étanche contre le collet (40) ou contre la première partie (18).

2. Dispositif selon la revendication 1, caractérisé en ce que le corps d'étanchéité (42) comporte des lèvres d'étanchéité (58,62).

3. Dispositif selon la revendication 1 ou 2, caractérisé en ce que le corps d'étanchéité (42) comporte des évidements (60) servant à loger un matériau d'étanchéité.

4. Dispositif selon une ou plusieurs des revendications précédentes, caractérisé en ce qu'il est prévu un anneau (44), qui est relié en étant bloqué en rotation au collet (40) et sur lequel le corps d'étanchéité (42) peut être appliqué d'une manière étanche.

5. Dispositif selon une ou plusieurs des revendications précédentes, caractérisé en ce que le corps d'étanchéité (42) est agencé sous la forme d'une bague d'étanchéité réalisée en une matière plastique résistante à l'usure et qui peut être fixée notamment par des vis (56) sur la première partie (18) ou sur le collet (40).

6. Dispositif selon une ou plusieurs des revendications précédentes, caractérisé en ce que le collet (40) possède une surface d'étanchéité (46) disposée axialement et une surface de fixation (48) disposée radialement.

7. Dispositif selon la revendication 6, caractérisé en ce que la surface de fixation (48) est agencée de manière à loger un palier (28).

8. Rouleau d'une moissonneuse, notamment d'une presse à balles cylindriques, qui est reçu au moyen d'un arbre (34) de manière à pouvoir tourner dans un palier (28), le palier (28) étant retenu dans une paroi, caractérisé par un dispositif (38) selon une ou plusieurs des revendications précédentes, le rouleau représentant la première et la paroi représentant la seconde des parties (18,24).

9. Rouleau selon la revendication 8, caractérisé par un tambour creux (30) , qui est monté d'une manière bloquée en rotation sur une bride (32), la bride (32) étant distante d'une face frontale (36) du tambour (18) et recevant d'une manière centrée un arbre (34) agencé sous la forme d'un bout d'arbre et qui est reçu dans le palier (28).
